# DEMANDE DE BREVET EUROPEEN

(11) **EP 0 576 378 A1**
(43) Date de publication de la demande: **29.12.1993**
(21) Numéro de dépôt: 93420272.2
(22) Date de dépôt: 24.06.1993
(51) Int. Cl.: B23Q 1/18

(54) **Module linéaire de guidage pour la translation et la manutention de toutes pièces et accessoires**

(30) Priorité: 25.06.1992 FR 9208180
(71) Demandeur: KINETIC TECHNOLOGIES (S.A.), F-42000 Saint-Etienne (FR)
(72) Inventeur: Coron, Jean-Paul, F-69440 Saint-Maurice-Sur-Dargoire (FR)
(74) Mandataire: Dupuis, François

(57) **Abrégé**

Le module linéaire de guidage comprend un corps (1) avec sur sa face supérieure une fente horizontale autorisant le positionnement d'une courroie (2) de protection, et le passage d'un trainard (3) se déplaçant à l'intérieur dudit module ; ladite courroie est enroulée sur des galets (4). Le module comprend un rail de guidage (6), ledit rail autorisant la réception et chevauchement de chariots (7) supportant le trainard (3). Le profil intérieur dudit module est agencé avec une pluralité de formes et évidements constituant des zones de positionnement des moyens de guidage et d'entraînement du trainard et des moyens de mise en tension de la courroie d'entraînement.

Le module reçoit sur l'un des évidements (9) latéraux une crémaillère (10) à position fixe solidarisée à la paroi en regard du corps du module et coopérant avec un pignon (12) monté en bout d'un arbre (13.1) d'un bloc moteur (13), le bloc moteur est positionné fixement sur une embase (14) solidarisée à une semelle (15), associée au trainard (3), l'ensemble restant à position fixe par rapport à un plan d'appui de référence, et l'actionnement du pignon-crémaillère permettant le déplacement du corps du module linéaire, par rapport au dit ensemble (14-15-3).

## Description

L'invention se rattache au secteur technique des moyens de manutention et de déplacement en lignes de pièces trouvant notamment des applications dans les automatismes et en particulier pour les machines, machines-outils, centres d'usinage à commandes numériques, presses à injecter, robots industriels et tout système d'alimentation automatique, appareils de mesure, manipulateurs.

Le concept de modules linéaires, de transfert et de manutention est connu depuis de nombreuses années et la demanderesse exploite des modules linéaires de ce type ayant fait notamment l'objet de la demande de brevet publiée en France n° 2659890, et des dépôts non publiés n° 91-12274 et n° 91-14924.

On connaît également l'utilisation de modules qui sont animés d'un mouvement de translation du corps mais en étant agencés avec des moyens disposés à l'extérieur du module pour autoriser les mouvements précités.

Dans le cadre de ses recherches, en vue de développer les utilisations de tels modules linéaires de guidage, la demanderesse a apporté des perfectionnements permettant le déplacement du module de guidage par rapport à l'axe d'entrainement et de déplacement des chariots intégrés dans ledit module en protégeant l'ensemble des mécanismes de fonctionnement. Ces perfectionnements permettent en outre un développement intéressant par l'agencement complémentaire du module de guidage avec des moyens susceptibles d'augmenter de manière très sensible la longueur développée à partir du déplacement dudit module, en permettant ainsi des fonctions complémentaires de saisie d'outils ou autres.

Selon une première caractéristique, le module linéaire de guidage pour la translation et la manutention de toutes pièces et accessoires est du type comprenant un corps creux intérieurement présentant sur sa face supérieure une fente horizontale autorisant le positionnement d'une bande ou courroie de protection, et le passage de la partie supérieure d'au moins un trainard susceptible de coulisser et se déplacer à l'intérieur dudit module, ladite courroie étant enroulée sur des galets disposés près des extrémités du module, l'un des galets étant monté sur un support réglable en position assurant la mise en tension de la courroie, ledit module comprenant intérieurement un rail de guidage disposé longitudinalement en étant fixé à une paroi intérieure du corps du module, ledit rail autorisant la réception et chevauchement d'un ou de plusieurs chariots supportant le trainard, des embouts étant disposés et fixés aux extrémités transversales du corps du module, le profil intérieur dudit module étant agencé avec une pluralité de formes et évidements constituant des zones de positionnement des moyens de guidage et d'entraînement du trainard et des moyens de mise en tension de la courroie d'entraînement,
ledit module étant caractérisé en ce qu'il reçoit sur l'un des évidements latéraux une crémaillère à position fixe solidarisée à la paroi en regard du corps du module et coopérant avec un pignon monté en bout d'un arbre d'un bloc moteur, ledit bloc moteur étant positionné fixement sur une embase solidarisée à une semelle, cette dernière étant associée au trainard, l'ensemble embase, semelle et trainard restant à position fixe par rapport à un plan d'appui de référence, et l'actionnement de l'ensemble pignon-crémaillère permettant le déplacement du corps du module linéaire, par rapport au dit ensemble.

Selon une autre caractéristique, le corps du module linéaire est agencé près de ses extrémités avec des embouts, et des galets d'entraînement de la courroie de grand diamètre débordant du plan extérieur de fond du module de guidage pour autoriser le débordement extérieur dans un plan longitudinal parallèle du brin inférieur de la bande ou courroie, ledit brin étant fixé à un endroit approprié à un chariot transporteur profilé susceptible de recevoir et de maintenir un élément plongeur, ledit chariot étant guidé par rapport au corps du module et étant déplacé en entraînant le plongeur associé lors de la mise en fonctionnement du bloc moteur unique, en offrant un effet multiplicateur de la longueur de course du corps du module par effet télescopique en vue d'accomplir d'autres fonctions, ce déplacement complémentaire s'effectuant simultanément avec le déplacement du corps du module et sans autre moyen de commande et de motorisation que le bloc moteur.

Ces caractéristiques et d'autres encore ressortiront bien de la suite de la description.

Pour fixer l'objet de l'invention illustrée d'une manière non limitative aux figures des dessins où :
- la figure 1 est une vue en coupe longitudinale d'un module de guidage incorporant les perfectionnements selon l'invention,

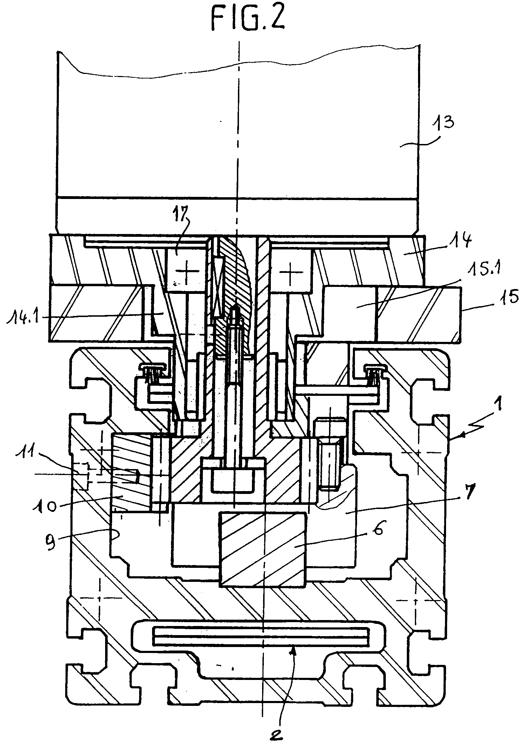

- la figure 2 est une vue en coupe transversale selon la ligne A.A de la figure 1,
- la figure 3 est une vue en plan selon la figure 1,
- la figure 4 est une vue d'une variante de réalisation du module linéaire dans une application complémentaire, cette vue étant en coupe longitudinale partielle,
- la figure 5 est une vue en coupe transversale selon la ligne B.B de la figure 4,
- la figure 6 est une vue en coupe transversale selon la ligne C.C de la figure 4,
- la figure 7 est une vue en coupe partielle selon la ligne D.D de la figure 4,
- la figure 8 est une vue partielle en variante de la figure 4 du module linéaire dans une application complémentaire.

Afin de rendre plus concret l'objet de l'invention, on le décrit maintenant d'une manière non limitative aux figures des dessins.

On rappelle succintement les éléments connus du modèle linéaire de guidage illustré aux figures des dessins, et dont les caractéristiques ont été décrites dans la demande de brevet publiée en France n° 2659890, et les dépôts non publiés n° 91-12274 et n° 91-14924.

Le module linéaire de guidage comprend un corps (1) réalisé en aluminium obtenu par filage. Ce corps, creux intérieurement, présente sur sa face supérieure une fente (1.1) horizontale autorisant le positionnement d'une bande ou courroie (2) de protection formant étanchéité avec un joint (2.5) racleur approprié fixé sur la paroi en regard du module. Cette fente permet aussi le passage de la partie supérieure d'au moins un trainard (3) susceptible de coulisser et se déplacer à l'intérieur du module, ce trainard pouvant coopérer avec tout moyen extérieur.

La bande ou courroie d'étanchéité est enroulée sur des galets (4) disposés près des extrémités des modules, lesdits galets étant montés sur des axes (4.1) disposés et fixés transversalement au module de guidage.

Comme indiqué précédemment dans les brevets précités, l'un des galets est monté sur un support (5) réglable en position pour assurer la mise en tension de la courroie d'étanchéité, ce support étant guidé dans le profil intérieur du module.

Le module comprend intérieurement un rail de guidage (6) disposé longitudinalement et fixé à une paroi intérieure (1.2) du corps, obtenue lors du filage de ce dernier. Ce rail profilé autorise la réception et le chevauchement d'un ou de plusieurs chariots (7) qui sont associés et supportent le trainard précité. Des embouts (8) sont disposés et fixés aux extrémités transversales du corps du module.

Le brin supérieur (2.3) de la courroie d'étanchéité est fixé par ses extrémités (2.1-2.2) à des moyens de blocage associés au trainard, tandis que le brin inférieur (2.4) est guidé dans une ouverture (1.4) formée entre la paroi intérieure (1.2) du corps du module et la plaque de fond (1.3) de celui-ci.

Le profil intérieur du module linéaire est par ailleurs agencé avec une pluralité de formes et d'évidements, pouvant notamment constituer des pistes de roulement, notamment décrits dans le brevet français non publié n° 91-14924, constituant des zones de positionnement des moyens de guidage et d'entraînement du trainard, et des moyens de mise en tension de la courroie d'entraînement.

Selon l'invention le module linéaire de guidage est aménagé pour recevoir intérieurement, sur l'un des évidements (9) latéraux, et une partie de sa longueur, une crémaillère (10) de grande longueur fixée, par boulonnage (11) ou autrement, à la paroi en regard du corps du module. Cette crémaillère, à position fixe, est susceptible de coopérer et engrener avec un pignon (12) monté en bout d'un arbre (13.1) d'un bloc moteur (13), positionné fixement sur une embase (14) associée et solidarisée elle-même à une semelle (15) de grande longueur elle-même fixée au trainard (3) introduit dans le corps du module linéaire. Entre ladite semelle (15) et le trainard (3) est prévue une plaque intermédiaire support (16).

Plus précisément, l'arbre (13.1) du bloc moteur est monté rotatif par le biais de roulement (17) à billes et/ou à aiguilles par rapport à l'embase précitée, laquelle présente une colonne (14.1) orientée vers l'intérieur du corps du module et permettant le guidage du pignon (12) précité qui vient engrèner avec la crémaillère. Ladite embase (14) présente à sa partie supérieure un évidement (14.2) de centrage du bloc moteur (13). Cette embase est fixée par boulonnage (18) à la semelle (15), laquelle est ainsi agencée avec une ouverture (15.1) pour le passage de la colonne de guidage du pignon.

L'extrémité avant (15.2) de l'embase (15) est agencée pour recevoir un moyen de blocage (19) du type boulons susceptible d'autoriser le positionnement et le blocage d'une patte (20) profilée, autorisant le serrage de l'une des extrémités (2.1) de la courroie (2) ou bande.

Ladite semelle (15) est fixée par boulonage (21) au trainard (3). Ladite semelle présente ainsi en regard de la partie supérieure du trainard un évidement intérieur (15.3) autorisant l'insertion et le positionnement de la plaque (16) intermédiaire avec le trainard. Cette plaque est liée au trainard par boulonnage (23). L'autre extrémité (2.2) de la courroie d'étanchéité est ainsi montée, serrée et fixée entre l'une des extrémités du trainard, la plaque (16) et l'extrémité arrière (15.4) de la semelle.

On a représenté en (24) de manière connue des conduits de distribution de fluide de graissage décrits précédemment dans les brevets précités exploités par la demanderesse et permettant une bonne lubrification au niveau des contacts et plans d'appui entre le ou les chariots (7) et les rails du guidage (6).

Le bloc moteur (13) étant en position fixe, l'ensemble défini par l'embase (14), la semelle (15) et trainard (3) reste donc également à position fixe. L'actionnement du moteur provoque la rotation du pignon (12) et ainsi un mouvement du corps du module (1) par le biais de la crémaillère (10). Le corps dudit module est donc déplacé dans un mouvement aller-retour, le rail (6) coulissant dans lesdits chariots (7) qui sont eux à position fixe. Afin d'assurer une limitation de course dudit corps de module, il est prévu des moyens de butée (25-26) fixés et solidarisés à l'intérieur du corps du module près des galets (4) d'entraînement. Une première butée (25) disposée près de la crémaillère (10) vient alors en contact avec la patte (20) en cas de déplacement maximum vers la gauche selon les dessins. La butée (26) sert de contre-appui à l'extrémité arrière du trainard (3) dans le cas d'un déplacement maximum vers la droite.

Ce montage et l'adaptation du corps du module sont particulièrement avantageux en ce qu'ils permettent une protection totale des mécanismes pignon-crémaillère autorisant le déplacement du corps du module. La courroie d'étanchéité préserve en totalité le volume intérieur du corps du module et donc le mécanisme.

La semelle (15) est agencée dans sa partie libre supérieure à côté de l'emplacement du bloc moteur pour recevoir et coopérer avec des moyens complémentaires disposés dans des plans différents tel que module complémentaire du guidage ou autre, et constituant un plan d'appui et de fixation de référence au déplacement du module de guidage tel que décrit. Ainsi c'est le corps du module lui-même qui est animé d'un mouvement de va et vient.

Un autre avantage de l'invention réside dans l'utilisation particulièrement intéressante du module de guidage définit dans les brevets antérieurs exploités par la demanderesse avec une adaptation et positionnement aisés de la crémaillère sur les profils intérieurs du corps du module et en garantissant une protection complète de l'ensemble des mécanismes.

Ces crémaillères peuvent être de toute longueur appropriée selon les besoins et les applications de l'invention, et il est possible de prévoir la conception d'une gamme de crémaillères de différentes longueurs permettant ainsi de faire varier la course de déplacement du module. La mise en place des crémaillères s'effectue sans difficulté.

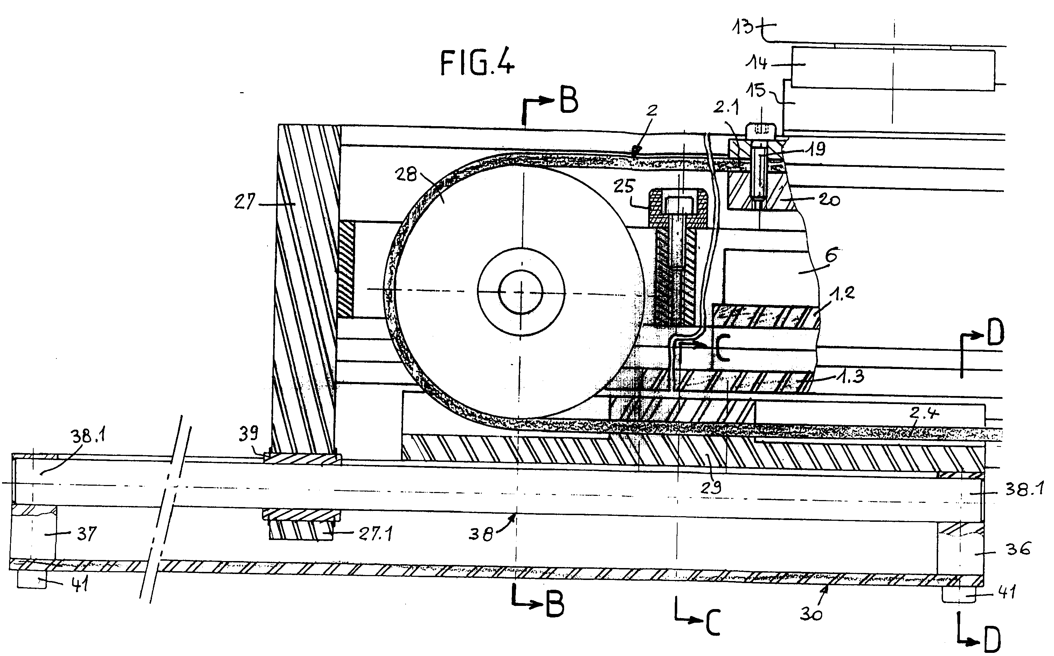

On a illustré aux figures 4 à 7 une mise en oeuvre complémentaire de l'invention, illustrant également le concept de déplacement du module de guidage avec un ensemble crémaillère-pignon, mais offrant un effet multiplicateur de la longueur de course du corps du module, par effet télescopique pour accomplir d'autres fonctions, ceci en utilisant le seul bloc moteur (13), indépendamment de tous autres moyens de commande et motorisation, ce déplacement télescopique complémentaire s'effectuant simultanément avec le déplacement du corps du module.

En se référant à la figure 4, il n'a pas été illustré, pour des raisons de clarté, le positionnement de l'ensemble crémaillère-pignon dans le corps du module de guidage qui reste identique à la description précitée. Les pièces et composants identiques conservent les mêmes références.

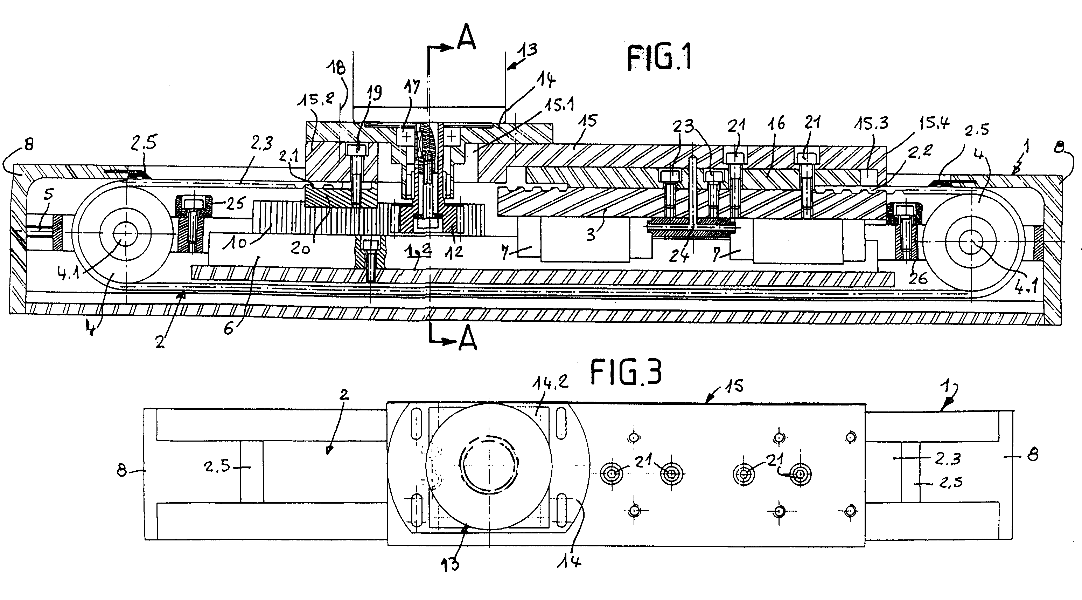

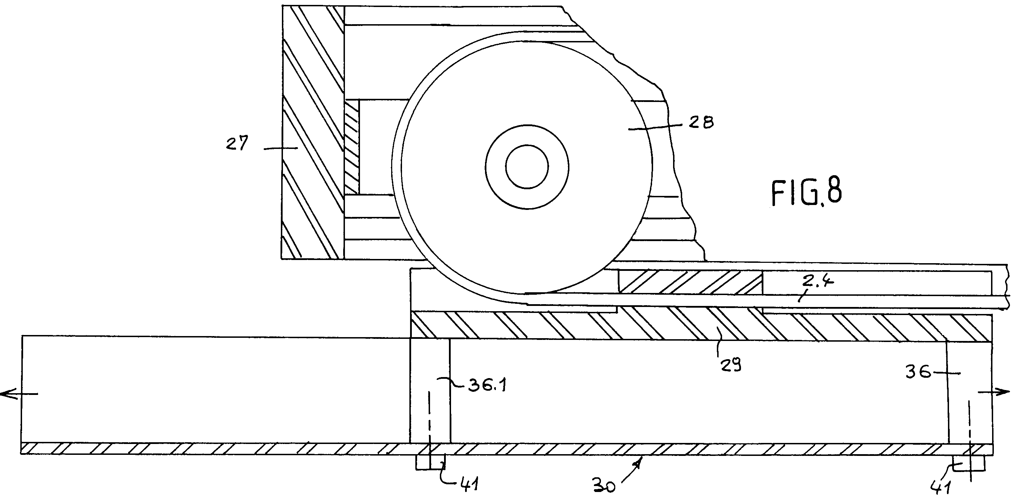

Dans cette mise en oeuvre, le corps du module linéaire de guidage reste agencé de manière similaire à celui illustré figure 1, à l'exception d'un des embouts (27) disposé à l'une des extrémités transversales dudit corps pour en assurer l'étanchéité, dans un montage particulier illustré figure 4. Dans le montage de la figure 8, les embouts (27) viennent s'appliquer directement aux extrémités du corps de manière similaire au montage de la figure 1.

Dans les mises en oeuvre des figures 4 et 8, les galets (28) d'entraînement de la courroie (2) sont de plus grand diamètre en vue de déborder du plan extérieur de fond du module de guidage, qui présente à cet effet des ouvertures de passage appropriées. Selon la figure 4, dans le cas de charges importantes, l'embout (27) est de plus grande dimension en débordant lui-même du corps du module pour permettre la fixation d'un ensemble support complémentaire de guidage d'un chariot transporteur (29) présentant un profil en 1, et recevant un plongeur (30) susceptible selon les mouvements du corps du module de déborder extérieurement. Selon la figure 8, dans le cas de charges moins importantes, le chariot transporteur (9) n'exige plus l'utilisation d'un profil complémentaire de guidage.

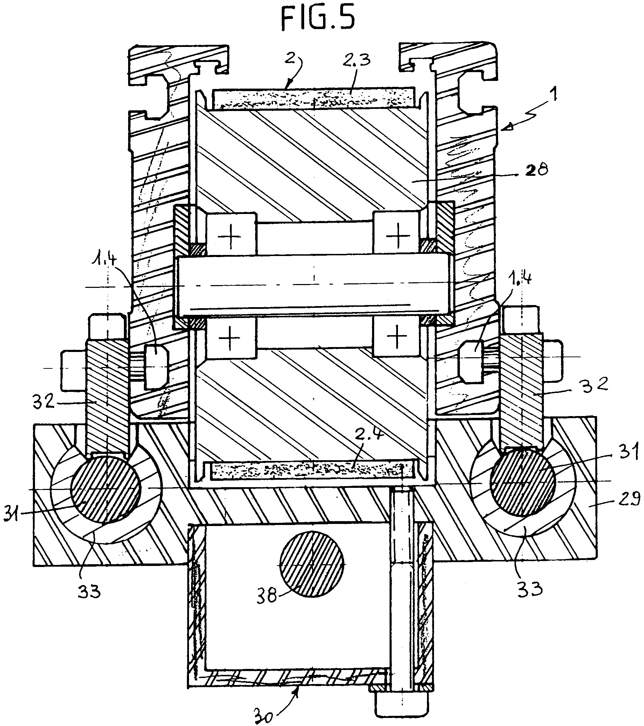

En se référant à la figure 5, le corps du module reçoit à partir de ses ailes extérieures latérales des guides (31) disposés de part et d'autre du module dans sa partie opposée à l'ouverture, ces guides étant disposés dans un même plan et fixés à une plaque support (32) elle-même positionnée fixement par rapport aux rainures en T profilées (1.4) établies extérieurement dans le corps du module, issues du filage initial. Les deux guides (31) sont disposés extérieurement le long du corps du module et permettent par des manchons (33) le coulissement du chariot transporteur (29) complémentaire par ses parties latérales. Ce chariot est disposé en regard du brin inférieur (2.4) de la courroie d'entraînement du module de guidage, en étant solidarisé au dit brin pour être entraîné dans un mouvement de va et vient accompagnant le déplacement dudit brin lors de la mise en fonction du bloc moteur (13) et de l'engrènement du pignon (12) sur la crémaillère (10).

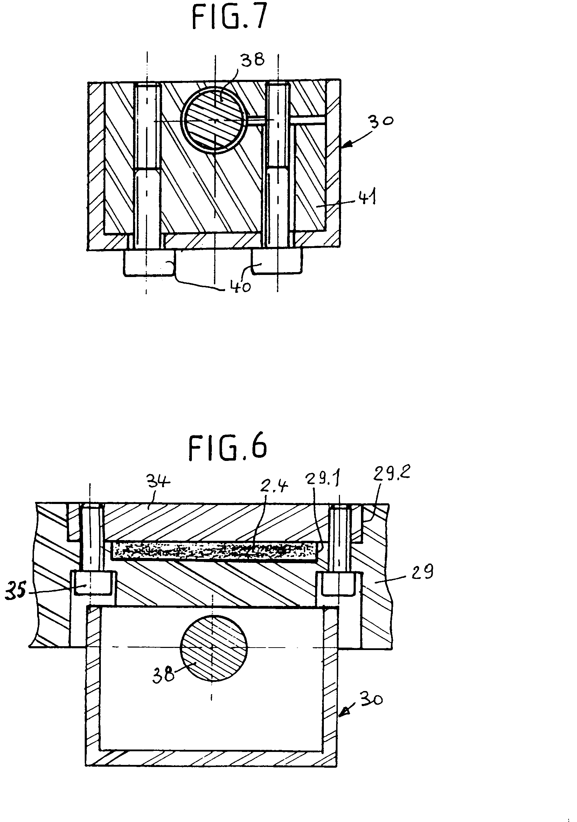

Cette fixation est illustrée à la figure 6 notamment. Le chariot est agencé dans sa partie centrale et inférieure de manière avantageuse avec un double évidement (29.1-29.2) à structure étagée permettant dans sa partie de fond le positionnement et centrage du brin (2.4) de la courroie, et d'une plaquette de liaison (34) enserrant ledit brin, ladite plaquette étant maintenue serrée par boulonnage (35) au dit chariot. Celui-ci est donc parfaitement lié à la courroie, et donc assujetti aux mêmes déplacements que celle-ci.

Dans sa partie supérieure opposée, le chariot est aménagé pour recevoir un élément en forme de plongeur (30) monté, dans une première réalisation en cas de charges importantes, d'une part entre un premier flasque (36) disposé et fixé par soudure ou autrement à l'arrière du chariot transporteur (29), et d'autre part sur un flasque complémentaire (37) monté en bout d'un arbre (38) de grande longueur, monté dans un plan axial parallèle au plongeur. Cet arbre (38) est positionné par le premier flasque (36) qui accompagne le mouvement du chariot, et guidé par le prolongement (27.1) de l'embout (27) inférieur, qui lui est fixe sur le module de guidage linéaire. Cet embout présente un manchon de guidage (39) autorisant le positionnement et coulissement dudit arbre (38).

Selon la figure 8, et dans le cas de charges moins importantes, il n'est plus nécessaire d'utiliser l'arbre (38) ni le prolongement (27.1) de l'embout (27). Le plongeur (30) est maintenu par rapport au chariot (29) par des flasques (36-36.1).

Selon les deux variantes de réalisation aux figures 4 et 8, l'élément plongeur peut ainsi se déplacer selon les flêches F-F' sous l'action initiale de l'ensemble crémaillère-pignon (10-12) d'une longueur égale aux déplacements du module de guidage par rapport à l'axe de fixation de l'ensemble correspondant notamment à l'axe du groupe moteur. Le chariot intermédiaire (29) précité est judicieusement positionné sur le brin inférieur (2.4) de la courroie (2) pour permettre d'obtenir une longueur de développement télescopique du plongeur avec un effet multiplicateur maximum. Le plongeur est fixé par boulonnage (40) au corps du chariot. Le profil de ce plongeur est établi de toute manière appropriée en fonction des besoins et applications. Selon les figures 4 et 7, le serrage en position de l'arbre (38) par ses extrémités (38.1) dans les flasques (36-37) s'effectue par exemple par boulonnage (41), les flasques étant agencés avec une fente permettant par effet de serrage et élasticité la fixation et tenue de l'arbre (38) dans les flasques supports.

Les avantages ressortent bien de l'invention et on souligne en particulier les applications nouvelles du module de guidage qui sont offertes par cet agencement nouveau des moyens d'entraînement du trainard et chariot transporteur intermédiaire. Le montage est simple et peut être adapté à tout besoin particulier et à toutes charges.

Sans sortir du cadre de l'invention, le plongeur peut être d'une longueur pouvant s'intégrer dans le volume extérieur du corps du module ou être d'une dimension supérieure pouvant déborder partiellement même en positionnement de non sollicitation. L'extrémité du plongeur peut être agencée de toute manière appropriée pour recevoir des outils, des systèmes de préhension divers, des moyens de pinçage pour outils ou constituer des moyens de mesure ou autres.

## Revendications

**1 -** Module linéaire de guidage pour la translation et la manutention de toutes pièces et accessoires du type comprenant un corps creux intérieurement présentant sur sa face supérieure une fente (1.1) horizontale autorisant le positionnement d'une bande ou courroie (2) de protection, et le passage de la partie supérieure d'au moins un trainard (3) susceptible de coulisser et se déplacer à l'intérieur dudit module, ladite courroie étant enroulée sur des galets (4) disposés près des extrémités du module, l'un des galets étant monté sur un support (5) réglable en position assurant la mise en tension de la courroie, ledit module comprenant intérieurement un rail de guidage (6) disposé longitudinalement en étant fixé à une paroi intérieure (1.2) du corps du module, ledit rail autorisant la réception et chevauchement d'un ou de plusieurs chariots (7) supportant le trainard (3), des embouts (8) étant disposés et fixés aux extrémités transversales du corps du module, le profil intérieur dudit module étant agencé avec une pluralité de formes et évidements constituant des zones de positionnement des moyens de guidage et d'entraînement du trainard et des moyens de mise en tension de la courroie d'entraînement,
le module étant caractérisé en ce qu'il reçoit sur l'un des évidements (9) latéraux une crémaillère (10) à position fixe solidarisée à la paroi en regard du corps du module et coopérant avec un pignon (12) monté en bout d'un arbre (13.1) d'un bloc moteur (13), ledit bloc moteur étant positionné fixement sur une embase (14) solidarisée à une semelle (15), cette dernière étant associée au trainard (3), l'ensemble embase, semelle et trainard restant à position fixe par rapport à un plan d'appui de référence, et l'actionnement de l'ensemble pignon-crémaillère permettant le déplacement du corps du module linéaire, par rapport au dit ensemble (14-15-3).

**2 -** Module, selon la revendication 1, caractérisé en ce que l'embase (14) présente une colonne (14.1) orientée vers l'intérieur du corps et permettant le guidage du pignon (12) monté en bout de l'arbre (13.1) du bloc moteur (13), des moyens de roulement (17) permettant la rotation de l'arbre (13.1) par rapport à l'embase, ladite embase étant solidarisée à la semelle (15) par boulonnage (18), ladite semelle étant agencée avec une ouverture (15.1) pour le passage de la colonne de guidage (14.1) du pignon.

**3 -** Module, selon l'une quelconque des revendications 1 et 2, caractérisé en ce que la semelle (15) est agencée dans sa partie libre supérieure près de l'emplacement du bloc moteur pour recevoir et coopérer avec des moyens complémentaires disposés dans des plans différents et constituant un plan d'appui et de fixation de référence au déplacement du module de guidage.

**4 -** Module, selon la revendication 1, caractérisé en ce que la semelle (15) est solidarisée au trainard (3) et est agencée avec des moyens complémentaires pour assurer la tenue et la fixation des extrémités (2.1-2.2) du brin supérieur (2.3) de la courroie d'entraînement enroulée sur les galets (4).

**5 -** Module, selon la revendication 4, caractérisé en ce que l'extrémité avant (15.2) de l'embase (15) est agencée pour recevoir un moyen de blocage (19) du type boulon autorisant le positionnement et le blocage d'une patte (20) profilée autorisant le serrage de l'une des extrémités (2.1) de la courroie (2).

**6 -** Module, selon la revendication 4, caractérisé en ce que la semelle (15) présente en regard de la partie supérieure du trainard un évidement intérieur (15.3) autorisant l'insertion et le positionnement d'une plaque (16) intermédiaire avec le trainard, ladite plaque étant liée au trainard par boulonnage (23), l'autre extrémité (2.2) du brin supérieur (2.1) de la courroie étant montée serrée et fixée entre la partie en regard du trainard, la plaque (16) et l'extrémité arrière (15.4) de la semelle.

**7 -** Module, selon la revendication 5, caractérisé en ce qu' un moyen de butée (25) est disposé près de la crémaillère (10) pour constituer un limiteur de course par contact et appui avec la patte (20) précitée.

**8 -** Module, selon l'une quelconque des revendications 1 à 7, caractérisé en ce que le corps du module linéaire est agencé près de ses extrémités avec des embouts (27), et des galets (28) d'entraînement de la courroie (2) de grand diamètre débordant du plan extérieur de fond du module de guidage pour autoriser le débordement extérieur dans un plan longitudinal parallèle du brin inférieur (2.4) de la bande ou courroie (2), ledit brin (2.4) étant fixé à un endroit approprié à un chariot transporteur (29) profilé susceptible de recevoir et de maintenir un élément plongeur (30), ledit chariot étant guidé par rapport au corps du module et étant déplacé en entraînant le plongeur associé lors de la mise en fonctionnement du bloc moteur unique (13), en offrant un effet multiplicateur de la longueur de course du corps du module par effet télescopique en vue d'accomplir d'autres fonctions, ce déplacement complémentaire s'effectuant simultanément avec le déplacement du corps du module et sans autre moyen de commande et de motorisation que le bloc moteur (13).

**9 -** Module, selon la revendication 8, caractérisé en ce que le corps du module reçoit à partir de ses ailes extérieures latérales des guides (31) disposés de part et d'autre du module, lesdits guides étant disposés dans un même plan et fixés à une plaque support (32) positionnée fixement par rapport aux rainures en T profilées (1.4) établies extérieurement dans le corps du module, les guides (31) étant disposés extérieurement le long du corps du module et permettant par des manchons (33) le coulissement du chariot transporteur (29).

**10 -** Module, selon l'une quelconque des revendications 8 et 9, caractérisé en ce que dans le cas de charges importantes, l'un des embouts (27) du corps du module est établi de grande dimension avec un prolongement (27.1) présentant une ouverture axiale de réception d'un manchon (39) et permettant le positionnement et guidage d'un arbre (38) complémentaire de grande longueur monté dans un plan axial parallèle au plongeur, ledit arbre (38) étant positionné sur un premier flasque (36) disposé et fixé à l'arrière du chariot transporteur (29) et d'autre part sur un flasque complémentaire (37) monté en bout de l'arbre (38) précité et solidarisé au plongeur.

**11 -** Module, selon l'une quelconque des revendications 8 et 9, caractérisé en ce que le plongeur (30) est maintenu par rapport au chariot (29) par des flasques (36-36.1).

**12 -** Module, selon l'une quelconque des revendications 8 et 9, caractérisé en ce que le chariot transporteur (29) présente un profil en 1, avec ses extrémités latérales coulissantes le long des guides (31), ledit chariot étant agencé dans sa partie centrale et inférieure avec un double évidement (29.1-29.2) permettant dans sa partie de fond le positionnement et centrage du brin (2.4) de la courroie et d'une plaquette de liaison (34) enserrant ledit brin, ladite plaquette étant serrée par boulonnage au dit chariot.

**13 -** Module, selon l'une quelconque des revendications 8, 9, 10 et 11, caractérisé en ce que le plongeur est fixé par boulonnage (40) au cours du chariot et présente un profil établi de manière appropriée en fonction des besoins et applications, I'extrémité dudit plongeur étant agencée pour recevoir tous moyens.
